# EUROPEAN PATENT APPLICATION

(11) **EP 2 202 642 A1**
(43) Date of publication of application: **30.06.2010**
(21) Application number: 08840376.1
(22) Date of filing: 14.10.2008
(51) Int. Cl.: G06F 13/00

(54) **CONTENT ACQUISITION DEVICE, PROGRAM, CONTENT ACQUISITION METHOD, AND CONTENT ACQUISITION SYSTEM**

(30) Priority: 15.10.2007 JP 2007268410
(71) Applicant: Sony Corporation, Tokyo 108-0075 (JP)
(72) Inventor: YAMAGISHI, Yasuaki, Tokyo 108-0075 (JP); MINOYA, Yasushi, Tokyo 108-0075 (JP)
(74) Representative: Nicholls, Michael John
(86) International application number: PCT/JP2008/068567
(87) International publication number: WO 2009/051099

(57) **Abstract**

[Object] To provide a content acquisition apparatus, a program, a content acquisition method and a content acquisition system.

[Solving Means] A content acquisition apparatus includes a receiving section for receiving first content information including division number information indicating the number of divided data, that are acquired by dividing first content data and that are respectively stored in any of one or two or more content storage apparatuses, and data information corresponding to the first content data, a generation section for generating for each of the divided data divided data specifying information indicating each of the divided data based on the division number information and the data information, and an acquisition section for acquiring according to the divided data specifying information the divided data from the one or two or more content storage apparatuses.

## Description

### Technical Field

The present invention relates to a content acquisition apparatus, a program, a content acquisition method and a content acquisition system.

### Background Art

In recent years, a method of downloading a content file through an RSS (Rich Site Summary) feed has become widespread. Specifically, a URL of a target content file is described in HTTP and the like in an <enclosure> element included in the RSS feed, and an information processing apparatus such as a Personal Computer (PC) or a mobile phone can download the content file based on the URL. Such downloading of a content file using an RSS feed is described in, for example, Patent Document 1.

[Patent Document 1] JP-A-2007-166363

### Disclosure of the Invention

### [Problems to be Solved by the Invention]

Here, since content is reproduced after the content file is downloaded, in case of reproducing a very large content file such as an HD (High Definition) video file, depending on the condition of the network, it often takes time until the reproduction is started. Although it is possible to improve acquisition efficiency of a content file by using a P2P file-sharing protocol, for example, even in such a case, the reproduction is not started until the entire content file is collectively acquired.

On the other hand, if a content file is divided into multiple file segments (divided data) and a URL of each file segment is defined in the RSS feed, the information processing apparatus can acquire the file segments in parallel from the multiple URLs, and thus, the acquisition may be speeded up.

However, if the number of file segments becomes large, the description of the <enclosure> element of the RSS feed becomes redundant resulting in an increase in the processing load of an RSS directory server or an RSS multicast server providing the RSS feed. Further, there is also a problem that the resources of an information processing apparatus (RSS feed reader) receiving the RSS feed will be strained.

Thus, the present invention has been achieved in view of the above-described problem, and the object of the present invention is to provide a content acquisition apparatus, a program, a content acquisition method and a content acquisition system that are new and improved, and that are capable of acquiring divided data based on a simplified description of first content information such as an RSS feed.

### [Means for Solving the Problems]

To solve the above-described problem, according to an aspect of the present invention, there is provided a content acquisition apparatus including a receiving section for receiving first content information including division number information indicating the number of divided data, that are acquired by dividing first content data and that are respectively stored in any of one or two or more content storage apparatuses, and data information corresponding to the first content data, a generation section for generating for each of the divided data divided data specifying information indicating each of the divided data based on the division number information and the data information, and an acquisition section for acquiring according to the divided data specifying information the divided data from the one or two or more content storage apparatuses.

With such a configuration, the generation section can generate multiple pieces of divided data specifying information indicating each of the divided data based on the first content information. Then, the acquisition section acquires, according to the divided data specifying information, the divided data from the one or two or more content storage apparatuses. Accordingly, according to the content acquisition apparatus, the divided data can be acquired even if the divided data specifying information indicating each of the divided data is not included in the first content information. As a result, the information amount of the first content information can be suppressed and the first content information can be prevented from becoming complicated.

Location information indicating the location of the divided data is stored in a location information storage apparatus specified based on the divided data specifying information, and the acquisition section may acquire the location information of the divided data from the location information storage apparatus specified based on the divided data specifying information and acquire the divided data from the content storage apparatus indicated by the location information.

Here, there is a case where the content storage apparatus storing the divided data is varied by being increased or decreased. Thereby, when the location information of the divided data is described in the divided data specifying information, a case may be assumed where the divided data cannot be acquired from the location indicated by the divided data specifying information or the location indicated by the divided data specifying information is not the optimum source for acquiring the divided data. Thus, by configuring the divided data specifying information as described above such that it is possible to specify the location information storage apparatus storing the location information of the divided data, the acquisition section can acquire the divided data more appropriately.

Further, the content acquisition apparatus may further include a storage section for storing the divided data acquired by the acquisition section, and a transmission section for transmitting the location information indicating the location of the divided data in the storage section to the location information storage apparatus specified based on the divided data specifying information.

With such a configuration, the location information storage apparatus that received from the transmission section the location information of the divided data in the storage section can newly add the location information as the location information of the divided data. As a result, it becomes possible for a plurality of content acquisition apparatuses to acquire the same divided data from different locations.

The acquisition section may select, when acquiring multiple pieces of the location information of the divided data from the location information storage apparatus specified based on the divided data specifying information, one piece of the location information from the multiple pieces of the location information and may acquire the divided data from the content storage apparatus indicated by the selected location information. With such a configuration, with the acquisition section acquiring the divided data selectively from a content storage apparatus from which the divided data can be easily acquired depending on, for example, the congestion status of the network, the efficiency in acquiring the divided data can be improved.

A hash-value management range corresponding to a hash value of unique identification information of the location information storage apparatus may be assigned to the location information storage apparatus, and each of the location information of the divided data may be stored in a distributed manner in the location information storage apparatus whose management range includes a hash value of the divided data specifying information indicating the divided data. With such a configuration, since the location information of the divided data are stored in a plurality of the location information storage apparatuses in a distributed manner, inquiries about the location information of the divided data can be prevented from concentrating on a location information storage apparatus.

The generation section may generate a number of pieces of the divided data specifying information, the number being indicated by the division number information, by adding to the data information each of elements, among elements included in a group of elements arranged in predetermined order, arranged in order within the range corresponding to the number indicated by the division number information. With such a configuration, the generation section can easily generate the divided data specifying information from the first content information.

The receiving section may further receive second content information indicating second content data and whose form is different from that of the first content information, and the acquisition section may acquire according to the second content information the second content data from a specific content storage apparatus. With such configuration, the acquisition section can acquire not only the divided data, but also the second content data, which is no divided, from the specific content storage apparatus.

The first content specifying information may be included in an RSS feed.

Further, to solve the above-described problem, according to another aspect of the present invention, there is provided a program causing a computer to function as a receiving section for receiving first content specifying information including division number information indicating the number of divided data, that are acquired by dividing first content data and that are respectively stored in any of one or two or more content storage apparatuses, and data information corresponding to the first content data, a generation section for generating for each of the divided data divided data specifying information indicating each of the divided data based on the division number information and the data information, and an acquisition section for acquiring according to the divided data specifying information the divided data from the one or two or more content storage apparatuses.

With such a program, it becomes possible to have hardware resources of computer including a CPU, a ROM, a RAM, or the like, for example, execute the functions of the receiving section, the generation section and the acquisition section as described above. That is, it becomes possible to have a computer using the program to function as the above-described content acquisition apparatus.

Further, to solve the above-described problem, according to another aspect of the present invention, there is provided a content acquisition method to be executed in a content acquisition apparatus including the steps of receiving first content specifying information including division number information indicating the number of divided data, that are acquired by dividing first content data and that are respectively stored in any of one or two or more content storage apparatuses, and data information corresponding tp the first content data, generating for each of the divided data divided data specifying information indicating each of the divided data based on the division number information and the data information, and acquiring according to the divided data specifying information the divided data from the one or two or more content storage apparatuses.

Further, to solve the above-described problem, according to another aspect of the present invention, there is provided a content acquisition system including one or two or more content storage apparatuses and a content acquisition apparatus. The content storage apparatus may includes a dividing section for dividing first content data and acquiring a predetermined number of divided data, a divided data storage section for storing each of the divided data, and a communication section for transmitting first content specifying information including division number information indicating the predetermined number and data information corresponding to the first content data. The content acquisition apparatus may include a receiving section for receiving the first content specifying information, a generation section for generating for each of the divided data divided data specifying information indicating each of the divided data based on the division number information and the data information, and an acquisition section for acquiring according to the divided data specifying information the divided data from the one or two or more content storage apparatuses.

### [Effect of the Invention]

As described above, according to the content acquisition apparatus, the program, the content acquisition method and the content acquisition system according to the present invention, the divided data can be acquired based on a simplified description of the first content information such as an RSS feed or the like.

### Brief Description of the Drawings

[FIG. 1] It is an explanatory diagram showing a configuration of a content acquisition system according to a present embodiment.
[FIG. 2] It is an explanatory diagram showing a flow of acquiring content in a content acquisition system relating to the present embodiment.
[FIG. 3] It is an explanatory diagram showing a flow of acquiring content in a content acquisition system relating to the present embodiment.
[FIG. 4] It is an explanatory diagram showing a flow of acquiring content in the content acquisition system relating to the present embodiment.
[FIG. 5] It is an explanatory diagram showing a flow of acquiring content in the content acquisition system according to the present embodiment.
[FIG. 6] It is an explanatory diagram showing a flow of acquiring content in the content acquisition system according to the present embodiment.
[FIG. 7] It is an explanatory diagram showing a hardware configuration of a node according to the present embodiment.
[FIG. 8] It is a function block diagram showing a configuration of the node according to the present embodiment.
[FIG. 9] It is an explanatory diagram showing an example of a hash-value management range assigned to each node.
[FIG. 10] It is an explanatory diagram showing an example of a name resolution table stored in a name resolution table storage section.
[FIG. 11] It is an explanatory diagram showing a generation section generating file segment names from a description of an <enclosure> element.
[FIG. 12] It is a sequence diagram showing a flow from chunking of content to releasing of an RSS feed.
[FIG. 13] It is a sequence diagram showing a flow from acquisition of the RSS to reproduction of the content.
[FIG. 14] It is a sequence diagram showing a flow from acquisition of the RSS to reproduction of the content.
[FIG. 15] It is a sequence diagram showing a flow from acquisition of the RSS to reproduction of the content.
[FIG. 16] It is a sequence diagram showing a flow from acquisition of the RSS to reproduction of the content.

### [Best Mode for Carrying Out the Invention]

Hereinafter, preferred embodiments of the present invention will be described in detail with reference to the appended drawings. Incidentally, in this specification and the appended drawings, structural elements that have substantially the same function and structure are denoted with the same reference numerals, and repeated explanation of these structural elements is omitted.

Further, the best mode for carrying out the invention will be explained in the order shown below.
(1) Overview of a content acquisition system according to a present embodiment
(2) Purpose of the present embodiment
   (2-1) A content acquisition system relating to the present embodiment
   (2-2) Purpose of the present embodiment
(3) Detailed description of the content acquisition system
   (3-1) Hardware configuration of a node
   (3-2) Functions of the node
   (3-3) Operation of the content acquisition system
(4) Conclusion

### (1) Overview of a content acquisition system according to a present embodiment

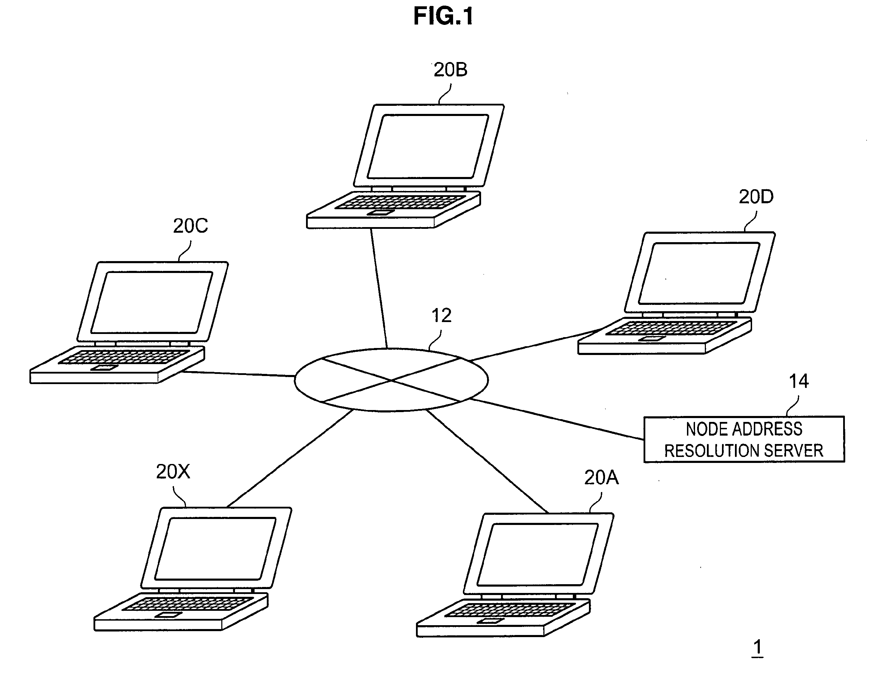

First, with reference to FIG. 1, an overview of a content acquisition system 1 according to the present embodiment will be explained.

FIG. 1 is an explanatory diagram showing a configuration of the content acquisition system 1 according to the present embodiment. As shown in FIG. 1, the content acquisition system 1 includes multiple nodes such as nodes 20A, 20B, 20C, 20D and 20X, and a node address resolution server 14. Incidentally, in this specification, when there is no need to distinguish between each of the nodes such as the nodes 20A, 20B, 20C, 20D and 20X, they are simply referred to as the node 20. The same is said of other numerals.

Each node 20 stores content data (file) which is real data of content or a file segment (divided data) acquired by chunking (dividing) the content data. Further, each node 20 stores a URL (Uniform Resource Locator) as location information indicating a location where a predetermined file segment is stored. That is, each node 20 has a function of a content storage apparatus and a function of a location information storage apparatus.

Further, each node 20 also has a function of a content acquisition apparatus for receiving an RSS feed including in an <enclosure> element information indicating certain content and for acquiring via a communication network 12 file segments of the content stored in other nodes 20.

Briefly explaining, each node 20 specifies based on information described in the <enclosure> element, in cooperation with the node address resolution server 14, one or two or more nodes 20 storing a URL of each file segment of certain content. Here, the node address resolution server 14 stores, in association with each other, a node ID as unique identification information for identifying each node 20 and a network address assigned to each node 20 on the network. When requested to resolve the network address of a node 20 having a certain node ID, the node address resolution server 14 transmits the network address stored in association with the node ID.

When each node 20 specifies one or two or more nodes 20 storing the URL of each file segment of certain content, each node 20 acquires the URL of each file segment from each of the specified nodes 20. Thus, each node 20 can acquire the file segment based on the URL of each file segment.

Incidentally, in FIG. 1, although a laptop computer is shown as an example of the node 20, the node 20 is not limited to a laptop computer. For example, it may be an information processing apparatus such as a personal computer, an image processing apparatus in homes (a DVD recorder, a video cassette recorder and the like), a mobile phone, a PHS (Personal Handyphone System), a portable music playback device, a portable image processing device, a PDA (Personal Digital Assistants), a home game machine, a portable game machine, home electronics and the like.

Further, the content is a concept that includes music data such as music, lectures, radio programs and the like, image data such as movies, television programs, video programs, photographs, documents, paintings, diagrams and the like, and any other type of data such as games, software and the like.

### (2) Purpose of the present embodiment

Subsequently, to make it easy to comprehend the present embodiment, the purpose of the content acquisition system 1 according to the present embodiment will be described in comparison with a content acquisition system 2 relating to the present embodiment.

### (2-1) A content acquisition system relating to the present embodiment

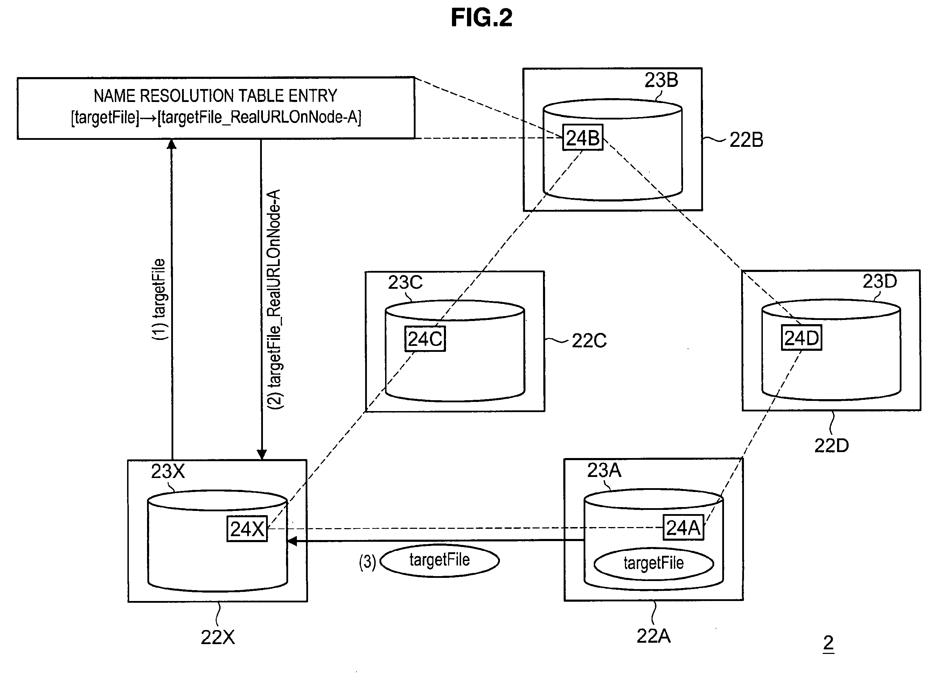

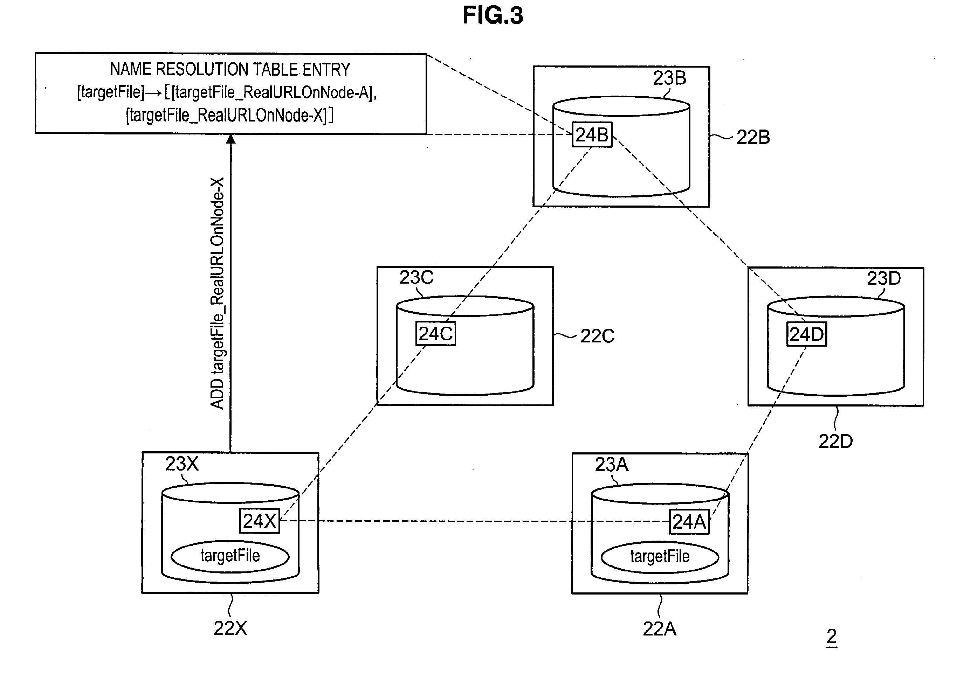

FIGS. 2 to 4 are explanatory diagrams showing flows of acquiring content in the content acquisition system 2 relating to the present embodiment.

When a certain node 22A holds a "targetFile (target file name)" which is a file to be acquired, the node 22A generates an RSS feed for notifying other nodes 22 that the targetFile exists in the storage section 23A of the node 22A. Normally, a URL "targetFile_RealURLOnNode-A" for acquiring the entity of the file is described in the url attribute of the <enclosure> element of the RSS feed.

Then, another node 22 acquires the RSS feed thus generated, and acquires the target file "targetFile" by using a file acquisition protocol based on "targetFile_RealURLOnNode-A" described in the RSS feed.

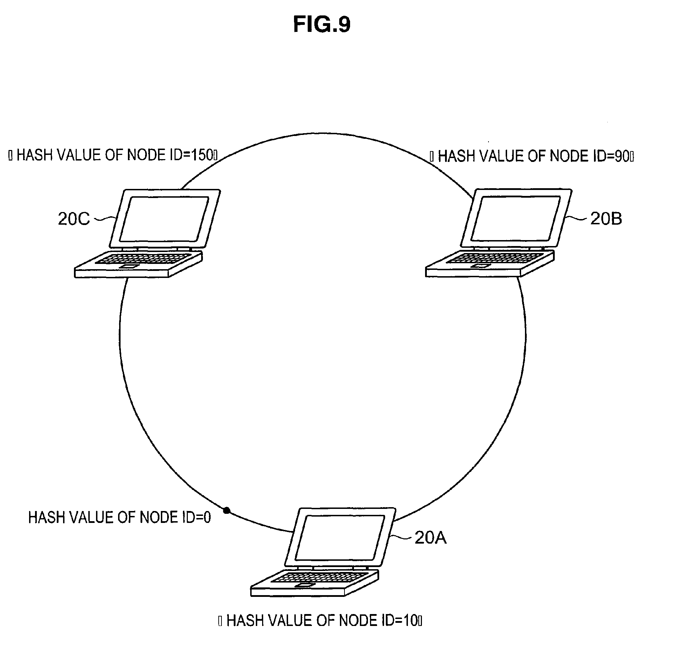

Here, a DHT (Distributed Hash Table) is configured based on the item <file name> in the url attribute of the <enclosure> element, and an entry in the name resolution table of <URL of file main body> is referred to based on the <file name> by using the DHT. Details of the DHT will be explained with reference to FIG. 9.

In this case, the node 22 intending to download the targetFile resolves the URL of the file by using the DHT distributed to the nodes corresponding to the hash values of the file names, and acquires the main body of the file. That is, the node 22 acquires the URL of the file by referring to the name resolution table, in which correspondence relationship between a hash value of the <target file name> and the <URL of file main body> is described.

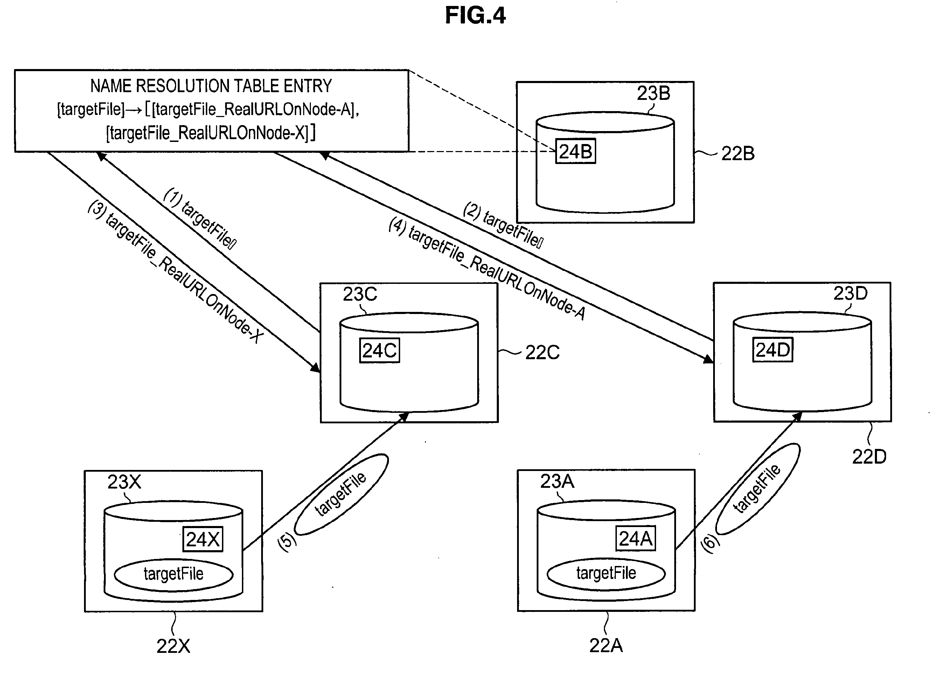

For example, a case is considered where, as shown in FIG. 2, name resolution tables 24A, 24B, 24C, 24D and 24X are distributed to the nodes 22A, 22B, 22C, 22D and 22X as indicated by the dotted lines and are stored therein. In this case, the name resolution table 24B, which is for searching for the URL of the file main body (targetFile_RealURLOnNode-A) based on the target file name, is managed by a node determined by a hash value (hash(targetFile)) of the name of the target file "targetFile" (in this case, the node 22B). Incidentally, in FIGS. 4 to 6, dotted lines connecting each name resolution table are omitted for the sake of clarity of the drawings.

The node 22X intending to acquire the targetFile acquires an RSS feed describing metadata regarding the targetFile ("targetFile" is described in the url attribute of the <enclosure> element). Then, the node 22X refers to the name resolution table 24B in the node 22B by using the DHT, acquires "targetFile_RealURLOnNode-A", which is the URL of the targetFile, and acquires the contents of the targetFile. Further, the node 22X stores the acquired targetFile in a storage section 23X.

Then, the node 22X adds a URL "targetFile_RealURLOnNode-X" of the targetFile in the storage section 23X after the item "targetFile_RealURLOnNode-A" of a pair consisting of "targetFile" -> "targetFile_RealURLOnNode-A", which is the name resolution table entry managed in the node 22B.

As a result, the URL that is sent back in response to the name resolution request to the node 22B regarding the targetFile will be the two URLs, "targetFile_RealURLOnNode-A" and "targetFile_RealURLOnNode-X".

Thus, as shown in FIG. 4, it becomes possible for the multiple nodes 22 to acquire the same file from different nodes. For example, when the node 22C and the node 22D desire to acquire a targetFile, the node 22C and the node 22D refer to the name resolution table 24B of the node 22B.

Then, it is assumed that the node 22C acquires "targetFile_RealURLOnNode-X" and the node 22D acquires "targetFile_RealURLOnNode-A". In this case, it is made possible for the nodes to acquire the targetFile simultaneously in parallel, such as the node 22C from the node 22X and the node 22D from the node 22A, for example.

Similarly, whenever another node 22 acquires a file, the URL of the file on the node 22 which acquired the file is added to the entry of the name resolution table. With such a configuration, as the copies of the file are distributed to the nodes 22, it becomes possible for the multiple nodes 22 to acquire a copy of the same file from different nodes 22 at the same time.

On the other hand, as shown in FIG. 4, when requests for resolution of a name of a certain file concentrate on the node 22B, the load on the node 22B increases and the processing performance for each request for name resolution deteriorates, and further, the overall processing speed is slowed.

### (2-2) Purpose of the present embodiment

Thus, with the alleviation of the problem as one purpose, it has been led to a concept of chunking a file into multiple file segments to store the file segments in the multiple nodes 20. For example, a file name <file name + n> (n is a file segment ID: 1, 2, ..., N) is assigned to each file segment, and a certain node 20 manages a set of <file name+n> -> <(copies of file segment) URL, URL, ...> as a name resolution table entry. Thus, one file name may be divided into multiple keys such as "file name-1", "file name-2", "file name-3", ..., and be distributed in a hash space, and a DHT search processing using a file name as a key may be performed in a distributed manner.

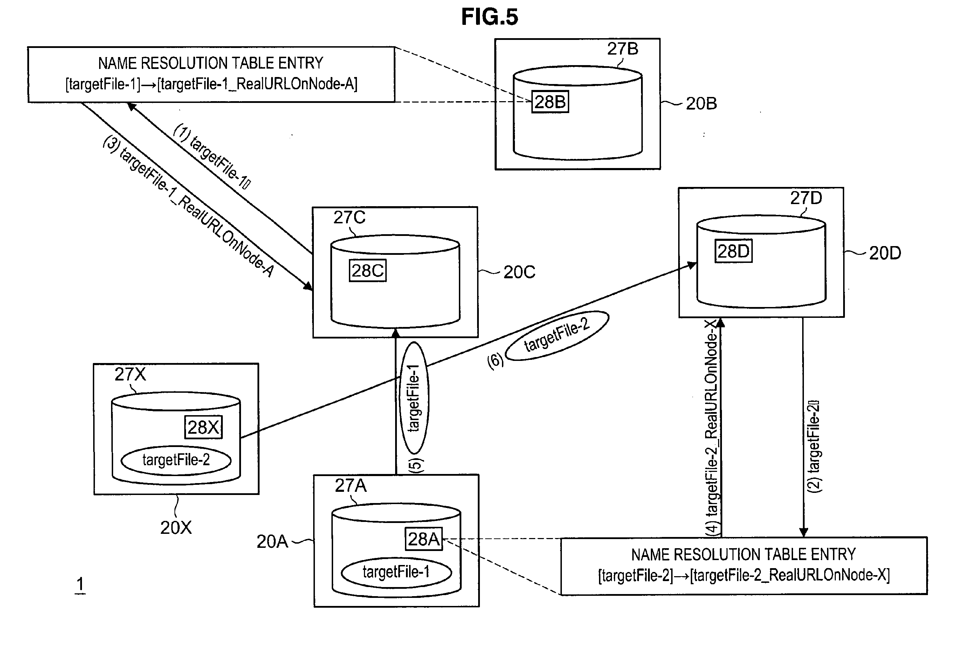

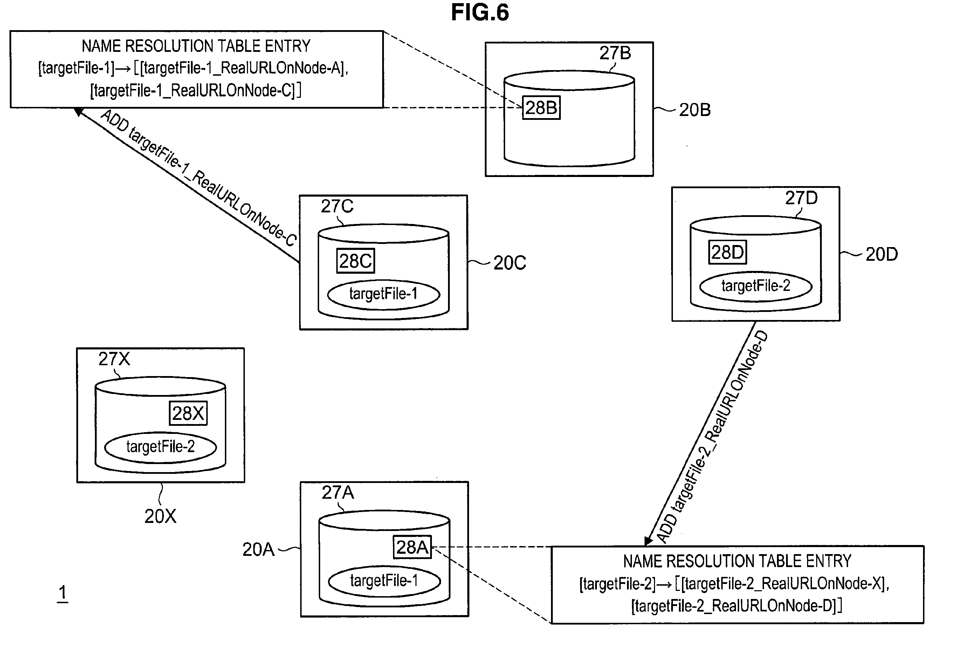

FIGS. 5 and 6 are explanatory diagrams showing flows of acquiring content in the content acquisition system 1 according to the present embodiment. As shown in FIG. 5, "targetFile" is chunked into "targetFile-1" and "targetFile-2", and the entity of the file "targetFile-1" is stored in a storage section 27A of the node 20A and the entity of the file "targetFile-2" is stored in a storage section 27X of the node 20X.

Further, the entry in a name resolution table regarding "targetFile-1" is managed by the node 20B and the entry in a name resolution table regarding "targetFile-2" is managed by the node 20A. "targetFile-1_RealURLOnNode-A", which is the URL of the entity of "targetFile-1", is stored in the entry of "targetFile-1". Further, "targetFile-2_RealURLOnNode-X", which is the URL of the entity of "targetFile-2", is stored in the entry of "targetFile-2".

Here, the node 20C intending to acquire "targetFile-1" performs a name resolution request to the node 20B since the name resolution table entry for resolving the URL of the entity of "targetFile-1" exists in the node 20B. Similarly, the node 20D intending to acquire "targetFile-2" performs a name resolution request to the node 20A since the name resolution table entry for resolving the URL of the entity of "targetFile-2" exists in the node 20A.

As a result, the node 20C acquires "targetFile-1_RealURLOnNode-A", which is the URL of "targetFile-1", and acquires "targetFile-1" from the node 20A. Similarly, the node 20D acquires "targetFile-2_RealURLOnNode-X", which is the URL of "targeFile-2", and acquires "targetFile-2" from the node 20X.

Further, as shown in FIG. 6, the node 20C, which acquired "targetFile-1", transmits to the node 20B "targetFile-1_RealURLOnNode-C" indicating the URL of "targetFile-1" in a storage section 27C. Then, the node 20B adds "targetFile-1_RealURLOnNode-C" as the URL of "targetFile-1".

Similarly, the node 20D, which acquired "targetFile-2", transmits to the node 20A "targetFile-2_RealURLOnNode-D" indicating the URL of "targetFile-2" in a storage section 27D. Then, the node 20A adds "targetFile-2_RealURLOnNode-D" as the URL of "targetFile-2".

Here, to realize a system of storing file segments of a content in multiple nodes 20 in a distributed manner as described above, a method can be conceived of describing each file segment name in an <enclosure> element in an RSS feed.

However, if the number of the file segments becomes large, the description of the <enclosure> element in the RSS feed becomes redundant resulting in an increase in the processing load of an RSS directory server, an RSS multicast server or the like providing the RSS feed. Further, there is also a problem that the resources of the nodes 20 receiving the RSS feed will be strained.

Thus, in view of the foregoing, the content acquisition system 1 according to the present embodiment has been achieved. According to the content acquisition system 1 according to the present embodiment, it is made possible to simplify the description of an <enclosure> element of an RSS feed and to acquire file segments.

### (3) Detailed description of the content acquisition system

Hereunder, the content acquisition system 1 will be described in detail in the order of hardware configuration of the node 20, functions of the node 20 and the operation of the content acquisition system.

### (3-1) Hardware configuration of a node

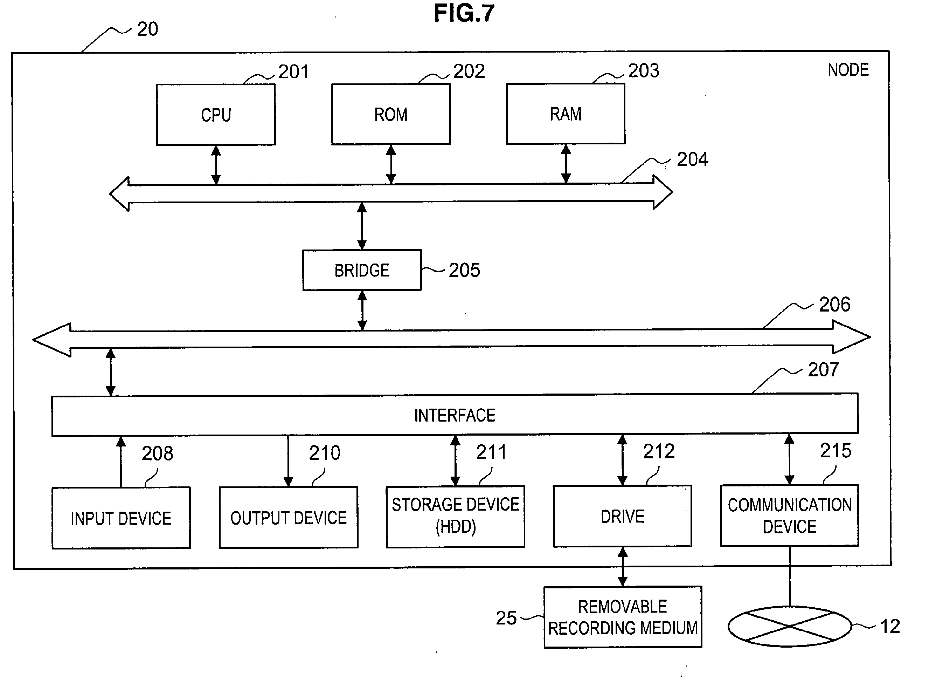

FIG. 7 is an explanatory diagram showing the hardware configuration of the node 20 according to the present embodiment. As shown in FIG. 7, the node 20 includes a CPU (Central Processing Unit) 201, a ROM (Read Only Memory) 202, a RAM (Random Access Memory) 203, a host bus 204, a bridge 205, an external bus 206, an interface 207, an input device 208, an output device 210, a storage device (HDD) 211, a drive 212 and a communication device 215.

The CPU 201 functions as an arithmetic processing unit and a control device, and controls overall operation within the node 20 according to various programs. The CPU 201 may also be a microprocessor. The ROM 202 stores programs to be used by the CPU 201, processing parameters and the like. The RAM 203 temporarily stores the programs to be used by the CPU 201 in its operations, parameters that vary as necessary in the course of the operations, or the like. The CPU 201, the ROM 202 and the RAM 203 are interconnected by the host bus 204, which is configured from a CPU bus or the like.

The host bus 204 is connected to the external bus 206 such as a PCI (Peripheral Component Interconnect/Interface) bus via the bridge 205. Incidentally, the host bus 204, the bridge 205 and the external bus 206 are not necessarily configured separately from each other, and these functions may be implemented in a single bus.

The input device 208 is configured, for example, from input means to be used by a user to input information, such as a mouse, a keyboard, a touch panel, a button, a microphone, a switch, a lever and the like, and an input control circuit that generates an input signal based on the input by the user and outputs the input signal to the CPU 201. By operating on the input device 208, the user of the node 20 can input various data to the node 20 and issue commands for processing operations.

The output device 210 is configured, for example, from a display device such as a CRT (Cathode Ray Tube) display device, a LCD (Liquid Crystal Display) device, an OLED (Organic Light Emitting Display) device, a lamp or the like, and an audio output device such as a speaker, a headphone or the like. The output device 210 outputs reproduced content, for example. Specifically, the display device displays various information such as reproduced video data in the form of text or images. On the other hand, the audio output device converts reproduced audio data and the like to sound and outputs the sound.

The storage device 211 is a device for storing data configured as an example of a storage section of the node 20 according to the present embodiment. The storage device 211 may include a storage medium, a recording device that records data in the storage medium, a read device that reads data from the storage medium and a deletion device that deletes data recorded in the storage medium. The storage device 211 is configured from a hard disk drive (HDD), for example. The storage device 211 drives a hard disk and stores programs to be executed by the CPU 201 and various data. The storage device 211 also stores a name resolution table, a file segment and the like described later.

The drive 212 is a reader/writer for a storage medium, and is built into or attached externally to the node 20. The drive 212 reads information recorded in a removable recording medium 25 attached, such as a magnetic disk, an optical disk, a magneto-optical disk, a semiconductor memory or the like, and outputs the information to the RAM 203.

The communication device 215 is a communication interface configured from a communication unit for connecting to a communication network 12, for example. Further, the communication device 215 may be a wireless LAN (Local Area Network) compatible communication device, a wireless USB compatible communication device or a wired communication device that communicates by wire. The communication device 215 transmits and receives between the node address resolution server 14 and the other nodes 20 various data such as an RSS feed, a URL and a file segment via the communication network 12.

### (3-2) Functions of the node

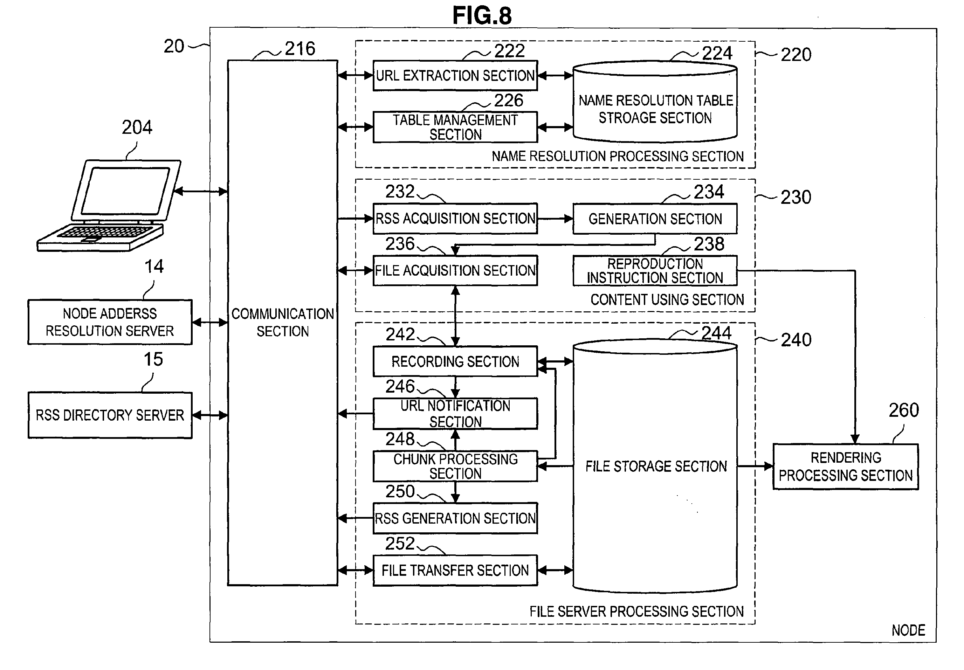

Subsequently, with reference to FIGS. 8 to 11, functions of the node 20 according to the present embodiment will be described.

FIG. 8 is a function block diagram showing a configuration of the node 20 according to the present embodiment. As shown in FIG. 8, the node 20 includes a communication section 216, a name resolution processing section 220, a content using section 230, a file server processing section 240 and a rendering processing section 260.

The communication section 216 is an interface to the other node 20X, the node address resolution server 14 or the like, and transmits and receives various data. For example, the communication section 216 has a function of a receiving section for receiving an RSS feed from an RSS directory server 15 or a function of a transmission section for transmitting a URL of a file segment stored in the node that includes the communication section 216. Here, the RSS directory server 15 may store an arbitrary RSS feed. Incidentally, in this specification, when the node 20 corresponds to the node 20A, for example, nodes other than the node 20A, such as the node 20B and the node 20C may be collectively referred to as the node 20X.

The name resolution processing section 220 includes a URL extraction section 222, a name resolution table storage section 224 and a table management section 226.

The table management section 226 manages a name resolution table stored in the name resolution table storage section 224. The name resolution table is a table containing an entry (name resolution table entry) in which a hash value of a file name of a file (file segments included) and a URL of the file are correlated with each other.

Specifically, a hash-value management range is assigned to each node 20, and each node 20 receives a name resolution table entry in which a hash value of a file name of a file whose hash value of the file name is included in the management range assigned to itself and a URL of the file are correlated with each other. Then, the table management section 226 stores the name resolution table entry received from the other node 20 in the name resolution table storage section 224. Here, with reference to FIG. 9, the hash-value management range assigned to each node 20 will be explained.

FIG. 9 is an explanatory diagram showing an example of the hash-value management range assigned to each node 20. In FIG. 9, a case is shown where the node 20A has a node ID whose hash value is 10, the node 20B has a node ID whose hash value is 90, and the node 20C has a node ID whose hash value is 150. Further, the node 20A and the node 20C participate in a P2P (Peer to Peer) network whereas the node 20B does not. Further, the node 20A and the node 20C are arranged on a ring (virtual ring constituted by arranging hash values of the node IDs in sequence).

In this case, since the hash value of the node ID of the node 20A is 10 and the hash value of the node ID of the node 20C is 150, hash values of 151 to 10 are assigned to the node 20A as the hash-value management range and hash values of 11 to 150 are assigned to the node 20C as the hash-value management range.

Here, when the node 20B tries to join the network, the node 20B searches for the node 20A and the node 20C having the hash values adjacent to the hash value 90 of the node 20B. When there are a larger number of the nodes 20 participating in the network, the node 20B can search for the adjacent nodes using an arbitrary algorithm. For example, the node 20B may first communicate with an arbitrary node, and if the node is not one of the adjacent nodes, the node 20B may obtain information from the node on the nodes adjacent to the node 20B.

When the node 20B obtains the information on the node 20A and the node 20C having the adjacent hash values, since the hash value of the node ID of the node 20A is 10 and the hash value of the node ID of the node 20C is 150, the node 20B sets the hash-value management range of itself to 11 to 90. With the participation of the node 20B to the network, the hash-value management range of the node 20C becomes 91 to 150.

Here, as described above, each node 20 participating in the network stores in correlation with each other a hash value of a file name of a file whose hash value of the file name is included in the management range of itself and a URL of the file. For example, before the node 20B joined the network, the node 20C stored the URL of a file having a file name whose hash value is within the range of 11 to 150. Accordingly, the table management section 226 of the node 20B receives from the node 20C a name resolution table entry which is a pair consisting of the URL of a file having a file name whose hash value is within the range of 11 to 90 and the hash value of the file name of the file from among the name resolution table entry stored in the node 20C, and stores the same.

On the other hand, when leaving the network, the node 20B searches for the node 20C with adjacent hash value, and transmits to the node 20C the name resolution table entry that is stored in the name resolution table storage section 224 of the node 20B. Then, the table management section 226 of the node 20C adds the name resolution table entry received from the node 20B in the name resolution table managed by the node 20C.

Incidentally, the node ID may be random identification information that each node determines based on time, for example, when joining the network and that is to be held thereby.

Heretofore, the hash-value management range assigned to each node 20 and the processing method at the time of a node joining the network or leaving the network have been explained. However, the above explanation is only an example, and other arbitrary methods can be used instead.

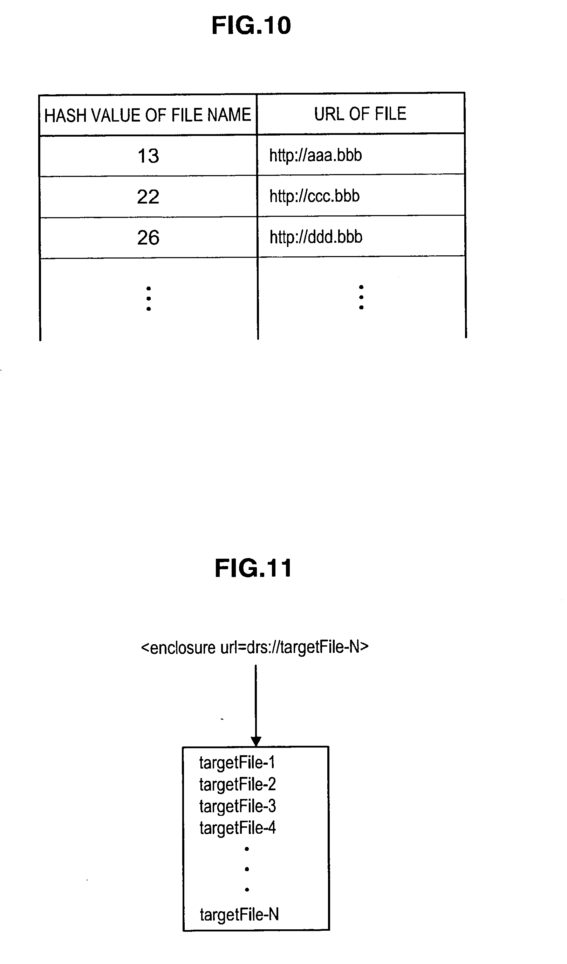

When there is a name resolution request from the other node 20X, the URL extraction section 222 sends back an appropriate URL in response to the name resolution request. Here, the URL extraction section 222 may receive as the name resolution request a hash value of a file segment name, for example, and may send back the URL stored in the name resolution table storage section 224 in correlation with the hash value. A node including such name resolution processing section 220 has a function of a location information storage section. Further, an example of the name resolution table stored in the name resolution table storage section 224 is shown in FIG. 10.

FIG. 10 is an explanatory diagram showing an example of the name resolution table stored in the name resolution table storage section 224. As shown in FIG. 10, there are included in the name resolution table multiple name resolution table entries in which hash values of file names and URLs indicating the locations of the files are correlated with each other.

The content using section 230 includes an RSS acquisition section 232, a generation section 234, a file acquisition section 236 and a reproduction instruction section 238, and corresponds to the RSS feed reader or an application that is called up by the RSS feed reader.

The RSS acquisition section 232 acquires an RSS feed selectively from, for example, the RSS feeds stored in the RSS directory server 15. Or, the RSS acquisition section 232 can acquire the RSS feed from the RSS multicast server (not shown) multicasting the RSS feeds. Here, a file name of content and the division number of the content are described, as data information relating to the content, in the <enclosure> element included in the RSS feed (the first content information) acquired by the RSS acquisition section 232.

The generation section 234 generates, based on the description of the <enclosure> element included in the RSS feed acquired by the RSS acquisition section 232, a file segment name as divided data specifying information indicating each file segment acquired by chunking the content. With reference to FIG. 11, functions of the generation section 234 will be specifically explained.

FIG. 11 is an explanatory diagram showing the generation section 234 generating a file segment name based on the description of the <enclosure> element. In the description of the <enclosure> element "drs:/ /targetFile-N" shown in FIG. 11, "drs" indicates that special information, not the location of a file, is described in the <enclosure> element.

Further, "targetFile" is the file name of a content file and "N" is the number of file segments acquired by dividing the content.

The generation section 234 generates each file segment name by adding a number of 1 to N to such file names. Specifically, as shown in FIG. 11, the generation section 234 generates "targetFile-1", "targetFile-2", "targetFile-3", "targetFile-4", ..., "targetFile-N".

The file acquisition section 236 functions as an acquisition section for acquiring each file segment based on each of the file segment names generated by the generation section 234. For example, the file acquisition section 236 first calculates the hash value of each file segment name. Then, the file acquisition section 236 asks the node address resolution server 14 for the network address of a node having the node ID whose management range includes the calculated hash value of the file segment name and acquires the network address.

Then, by transmitting a file segment name as a name resolution request to a node having the network address acquired from the node address resolution server 14, the file acquisition section 236 acquires the URL of the file segment from the URL extraction section 222 of the node. Then, the file acquisition section 236 acquires the entity of the file segment from the location indicated by the acquired URL of the file segment.

Incidentally, there is a case where the file acquisition section 236 acquires, for a file segment, multiple URLs of the file segment. In this case, the file acquisition section 236 may select one URL from the multiple URLs of the file segment and acquire the entity of the file segment from the location indicated by the selected URL. With such a configuration, with the file acquisition section 236 acquiring the entity of the file segment selectively from a node from which the segment may be easily acquired depending on, for example, the network congestion or the like, the efficiency in acquiring the file segment may be improved.

Further, a node storing multiple URLs of a certain file segment in the name resolution table storage section 224 may, upon a name resolution request from the other node, select one URL of the file segment from the multiple URLs of the file segment and transmit the same to the other node.

Further, heretofore, an example has been described where the generation section 234 generates each file segment name by adding a number of 1 to N to the file name of content. However, the present invention is not limited to such example. For example, the generation section 234 may add to the file names of the content each of the elements, among a group of elements that are arranged in predetermined order, arranged in order within the range of the number of file segments. Specifically, when the number of file segments is 8, the generation section 234 may acquire file names by adding, to the content names, each letter from a group of alphabets in the order of A, B, C, ..., until the eighth letter "H".

Further, it is not strictly necessary to express the number of file segments by using numbers, and it may be expressed by using any element among a group of elements arranged in a predetermined order.

The reproduction instruction section 238 instructs the rendering processing section 260 to reproduce the file segment acquired by the file acquisition section 236. That is, the rendering processing section 260 has a function of a reproduction section for making an output device for video and audio reproduce content in response to the instruction from the reproduction instruction section 238.

The file server processing section 240 includes a recording section 242, a file storage section 244, a URL notification section 246, a chunk processing section 248, an RSS generation section 250 and a file transfer section 252.

The recording section 242 records in the file storage section 244 the file segment of content acquired by the file acquisition section 236. The file storage section 244 functions as a divided data storage section storing the file segment of content, content data that is not chunked and the like. A node including such file storage section 244 functions as a content storage apparatus. Incidentally, in FIG. 8, the name resolution table storage section 224 and the file storage section 244 are shown as separate components. However, in the actual case, the name resolution table storage section 224 and the file storage section 244 may be physically one storage medium.

Further, the name resolution table storage section 224 and the file storage section 244 may be a storage medium such as, for example, a non-volatile memory such as an EEPROM (Electrically Erasable Programmable Read-Only Memory), an EPROM (Erasable Programmable Read Only Memory) or the like, a magnetic disk such as a hard disk, a circular magnetic disk or the like, an optical disk such as a CD-R (Compact Disc Recordable) /RW (Rewritable), a DVD-R (Digital Versatile Disc Recordable) /RW/+R/+RW/RAM (Random Access Memory), a BD (Blu-ray Disc (registered trademark))-R/BD-RE or the like, or a MO (Magneto Optical) disk.

The URL notification section 246 functions as a transmission section for transmitting a URL indicating the location, in the file storage section 244, of a file segment newly stored in the file storage section 244 by the recording section 242 to a node whose management range includes the hash value of the name of the file segment. The table management section 226 of the node that received a URL of a file segment from the URL notification section 246 can add in the name resolution table storage section 224 the URL of the file segment received from the URL notification section 246 as the URL of the file segment. As a result, it becomes possible for multiple nodes desiring to acquire the file segment later on to acquire the file segment from different nodes in a distributed manner.

Further, the URL notification section 246 transmits to each of the corresponding nodes a URL indicating the location, in the file storage section 244, of each file segment acquired by the chunk processing section 248 described later chunking content. The table management section 226 of a node that received the URL of a file segment from the URL notification section 246 can store in the name resolution table storage section 224 the URL of the file segment received from the URL notification section 246 as the URL of the file segment.

The chunk processing section 248 functions as a dividing section for chunking (dividing) arbitrary content data and acquiring multiple file segments (divided data). Each of the file segments acquired by the chunking by the chunk processing section 248 may be stored in the file storage section 244 by the recording section 242. In this case, the URL notification section 246 may transmit the URL indicating the location of each file segment in the file storage section 244 to each of the corresponding nodes along with the hash value of the file segment name.

When data of certain content is chunked by the chunk processing section 248, the RSS generation section 250 generates an RSS feed of the content. Specifically, the RSS generation section 250 generates an RSS feed including an <enclosure> element in which content name of the content and the number of file segments generated by the chunk processing by the chunk processing section 248 are described. The RSS feed generated by the RSS generation section 250 is transmitted to other node via the RSS directory server 15.

When the file transfer section 252 is requested by the file acquisition section 236 of the other node to transfer the file segment stored in the file storage section 244, the file transfer section 252 transfers the file segment to the other node.

Incidentally, heretofore, contents to be described in the <enclosure> element of the RSS feed in case the content data is chunked has been described. However, when the content data is not chunked, the <enclosure> element of the RSS feed (the second content information) may have a content name described therein. In this case, the file acquisition section 236 specifies, based on a hash value of the content name described in the <enclosure> element, a node to which a request for the name resolution is to be made for the content and acquires the entity of the content from the location indicated by the URL acquired from the node.

### (3-3) Operation of the content acquisition system

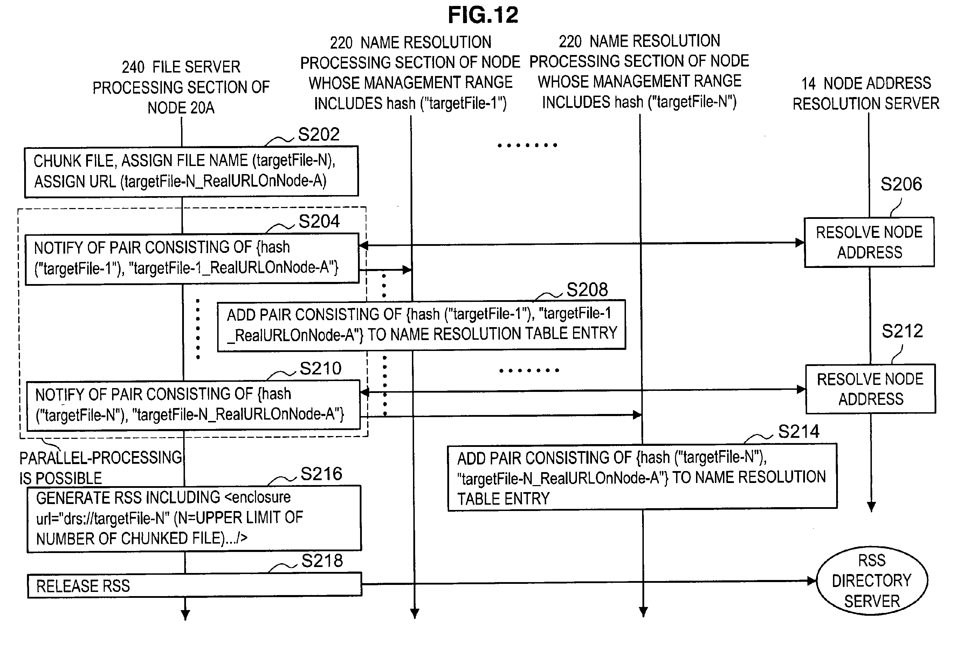

Heretofore, the functions of the node 20 according to the present embodiment have been explained with reference to FIGS. 8 to 11. Subsequently, with reference to FIGS. 12 to 16, the operation of the content acquisition system according to the present embodiment will be explained.

FIG. 12 is a sequence diagram showing a flow from chunking of content to releasing of an RSS feed. First, the chunk processing section 248 of the file server processing section 240 of the node 20A chunks a file of content, assigns a file name to each file segment, and assigns a URL in the file storage section 244 to each file segment (S202). When the number of file segments is "N", the chunk processing section 248 assigns to each file segment a file name such as "targetFile-(1 or 2 or 3 ... or N)". That is, in FIG. 12, the bold-faced "N" indicates (1, 2, 3, ..., N). Incidentally, when assigning a file segment name, a number to be added to the content name may be determined according to the reproduction order of the file segment.

Subsequently, the URL notification section 246 of the file server processing section 240 notifies a node whose management range includes a hash value of "targetFile-1" of a pair consisting of the hash value of "targetFIle-1" and the URL of "targetFile-1" (S204). At that time, the URL notification section 246 acquires from the node address resolution server 14 the network address of the node whose management range includes the hash value of "targetFile-1" (S206). Subsequently, the name resolution processing section 220 of the node whose management range includes the hash value of "targetFile-1" stores the pair consisting of the hash value of "targetFile-1" and the URL of "targetFile-1" in the name resolution table storage section 224 as a name resolution table entry (S208).

The URL notification section 246 of the file server processing section 240 of the node 20A performs the same processing for the file segments "targetFile-2" to "targetFile-N". For example, the URL notification section 246 notifies a node whose management range includes the hash value of "targetFile-N" of a pair consisting of the hash value of "targetFile-N" and the URL of "targetFile-N" (S210). At that time, the URL notification section 246 acquires from the node address resolution server 14 the network address of the node whose management range includes the hash value of "targetFile-N" (S212). Subsequently, the node whose management range includes the hash value of "targetFile-N" stores the pair consisting of the hash value of "targetFile-N" and the URL of "targetFile-N" in the name resolution table storage section 224 as a name resolution table entry (S214).

Then, the RSS generation section 250 of the file server processing section 240 of the node 20A generates an RSS feed in which "drs://targetFile-N" is described in the <enclosure> element (S216). Then, the RSS generation section 250 of the file server processing section 240 of the node 20A releases the generated RSS feed via the RSS directory server 15 (S218).

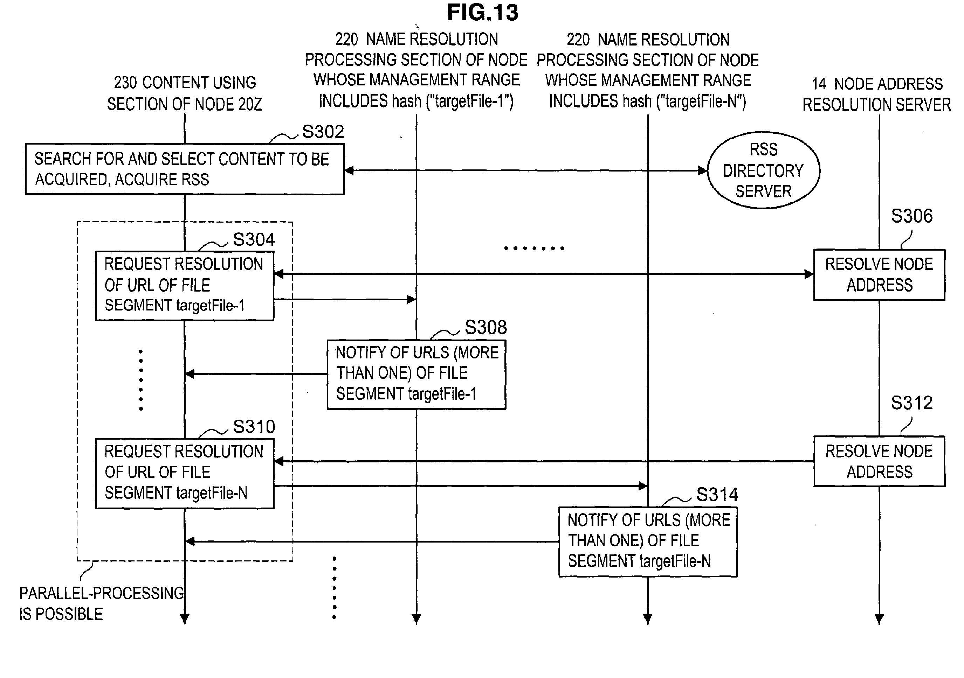

FIGS. 13 to 16 are sequence diagrams showing a flow from acquisition of an RSS to reproduction of content. First, as shown in FIG. 13, the RSS acquisition section 232 of the content using section 230 of a node 20Z searches for metadata described in the RSS feed released in the RSS directory server 15, and specifies and acquires an RSS feed corresponding to the content to be acquired (S302). Subsequently, the generation section 234 and the file acquisition section 236 of the content using section 230 of the node 20Z acquire URLs of a file segment group which is the content to be acquired that is chunked based on "drs://targetFile-<N>" described in the url attribute of the <enclosure> element of the RSS feed.

For example, the generation section 234 of the content using section 230 of the node 20Z generates "targetFile-1" to "targetFile-N" as file segment names. Then, the file acquisition section 236 of the content using section 230 of the node 20Z asks the name resolution processing section 220 of a node whose management range includes the hash value of "target-File-1" for the URL of "targetFile-1" (S304). At that time, the file acquisition section 236 acquires from the node address resolution server 14 the network address of the node whose management range includes the hash value of "targetFile-1" (S306). Then, the name resolution processing section 220 of the node whose management range includes the hash value of "targetFile-1" transmits the URL of "targetFile-1" to the node 20Z (S308).

The file acquisition section 236 of the content using section 230 of the node 20Z performs the same processing for "targetFile-2" to "targetFile-N". For example, the file acquisition section 236 asks the name resolution processing section 220 of a node whose management range includes the hash value of "targetFile-N" for the URL of "targetFile-N" (S310). At that time, the file acquisition section 236 acquires from the node address resolution server 14 the network address of the node whose management range includes the hash value of "targetFile-N" (S312). Then, the name resolution processing section 220 of the node whose management range includes the hash value of "targetFile-N" transmits the URL of "targetFile-N" to the node 20Z (S314). Incidentally, the processing of S304 through S310 for multiple file segments may be performed in parallel.

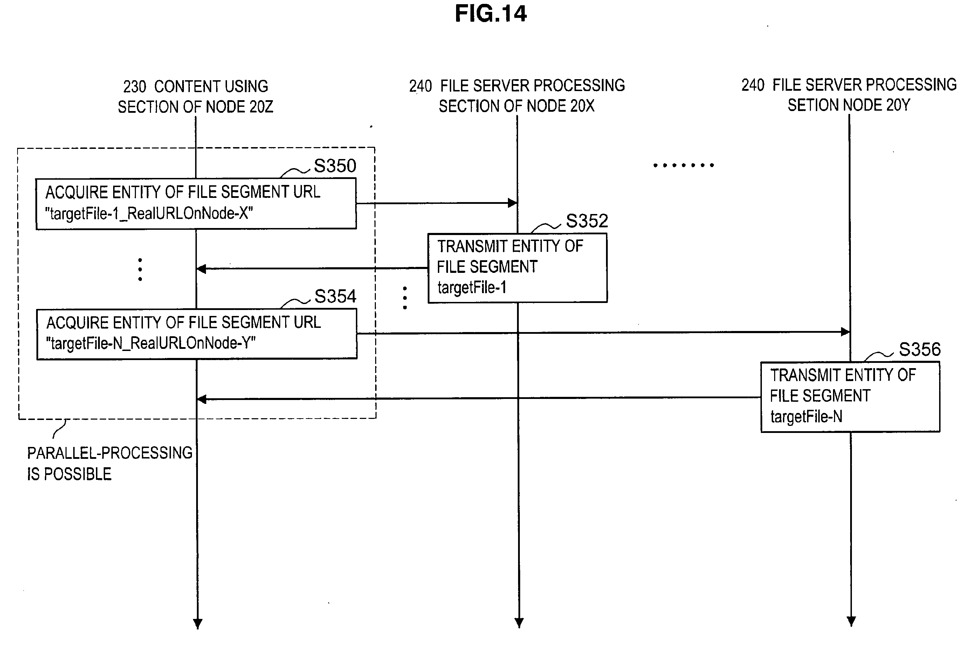

Then, as shown in FIG. 14, the file acquisition section 236 of the content using section 230 of the node 20Z selects for each file segment a URL among the acquired URLs and requests the file server processing 240 of a node corresponding to the location indicated by the URL for transmission of the file segment. For example, when the file acquisition section 236 requests the file server processing section 240 of the node 20X for transmission of "targetFile-1" (S350), the file server processing section 240 of the node 20X transmits "targetFile-1" to the node 20Z (S352).

The file acquisition section 236 of the content using section 230 of the node 20Z performs the same processing for "targetFile-2" to "targetFile-N". For example, when the file acquisition section 236 requests the file server processing section 240 of the node 20Y for transmission of "targetFile-N" (S354), the file server processing section 240 of the node 20Y transmits "targetFile-N" to the node 20Z (S356). Incidentally, the processing of S350 through S356 for multiple file segments may be performed in parallel.

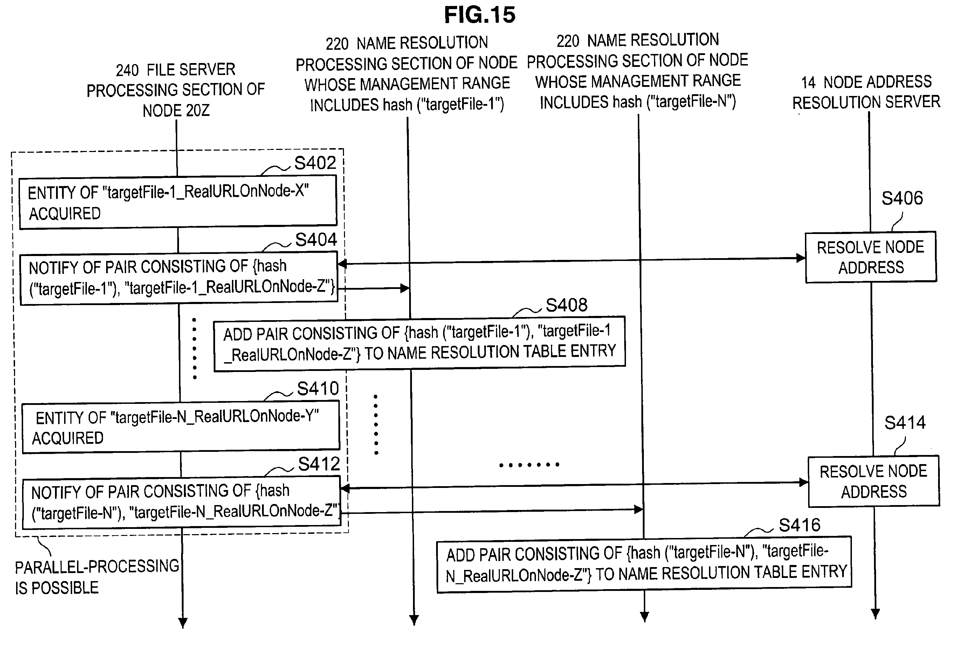

Subsequently, as shown in FIG. 15, "targetFile-1" acquired by the file acquisition section 236 of the node 20Z is stored in the file storage section 244 (S402). Then, the URL notification section 246 of the file server processing section 240 of the node 20Z notifies the node whose management range includes the hash value of "targetFile-1" of a pair consisting of the hash value of "targetFile-1" and the URL indicating the location of "targetFile-1" in the file storage section 244 (S404). At that time, the URL notification section 246 acquires from the node address resolution server 14 the network address of the node whose management range includes the hash value of "targetFile-1" (S406). The node whose management range includes the hash value of "targetFile-1" adds the pair consisting of the hash value of "targetFile-1" and the URL indicating the location of "targetFile-1" in the file storage section 244 as a name resolution table entry (S408).

Then, the file server processing section 240 of the node 20Z performs the same processing for "targetFile-2" to "targetFile-N". For example, "targetFile-N" acquired by the file acquisition section 236 of the node 20Z is stored in the file storage section 244 (S410). Then, the URL notification section 246 notifies a node whose management range includes the hash value of "targetFile-N" of a pair consisting of the hash value of "targetFile-N" and the URL indicating the location of "targetFile-N" in the file storage section 244 (S412). At that time, the URL notification section 246 acquires from the node address resolution server 14 the network address of the node whose management range includes the hash value of "targetFile-N" (S414). The node whose management range includes the hash value of "targetFile-N" adds the pair consisting of the hash value of "targetFile-N" and the URL indicating the location of "targetFile-N" in the file storage section 244 as a name resolution table entry (S416). Incidentally, the processing of S402 through S416 for multiple file segments may be performed in parallel.

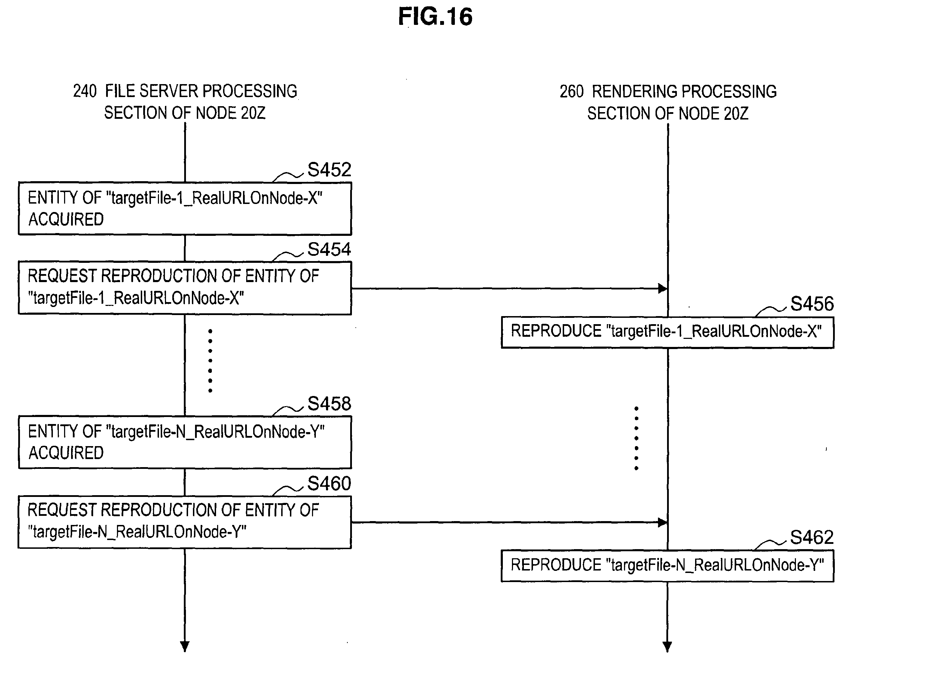

On the other hand, in parallel with the processing shown in FIG. 15, the rendering processing section 260 of the node 20Z sequentially reproduces content, in consideration of the order of file segments, starting with a file segment acquired. Specifically, as shown in FIG. 16, when "targetFile-1" acquired by the file acquisition section 236 of the node 20Z is stored in the file storage section 244 (S452), the file server processing section 240 of the node 20Z requests the rendering processing section 260 to reproduce "targetFile-1" (S454). In response to the request from the file server processing section 240, the rendering processing section 260 starts the reproduction of "targetFile-1" (S456).

Then, the node 20Z performs the same processing for "targetFile-2" to "targetFile-N". For example, when "targetFile-N" acquired by the file acquisition section 236 is stored in the file storage section 244 (S458), the file server processing section 240 requests the rendering processing section 260 to reproduce "targetFile-N" (S460). In response to the request from the file server processing section 240, the file rendering processing section 260 starts the reproduction of "targetFile-N" (S462).

### (4) Conclusion

As described above, with the node 20 according to the present embodiment, the generation section 234 can generate each file segment name based on the description of the <enclosure> element of the RSS feed. Then, according to each file segment name, the file acquisition section 236 acquires each file segment from other node. Accordingly, according to the node 20, even if each file segment name is not described in the <enclosure> element of the RSS feed, each file segment can be acquired. As a result, the information amount of the RSS feed can be suppressed and the RSS feed can be prevented from becoming complicated.

Heretofore, the preferred embodiments of the present invention have been explained with reference to the appended drawings. However, it is needles to say that the present invention is not limited to such examples. It is obvious that various modifications and alterations may be achieved by those skilled in the art within the scope of the claims, and it is understood that they are naturally within the scope of the claims.

For example, it is not necessary to perform the steps of the processing of the content acquisition system 1 in this specification in a time sequence following the order described in the sequence diagrams. For example, each step of the processing of the content acquisition system 1 may include a processing that is performed in parallel or individually (for example, parallel processing or object-based processing).

Further, it is possible to create a computer program that makes hardware embedded in the node 20, such as the CPU 201, the ROM 202 and the RAM 203, fulfill the function equivalent to that of each component of the node 20 described above. Further, a storage medium is provided in which the computer program is stored. Further, by configuring each of the function blocks shown in the function block diagram of FIG. 8 with hardware, it is possible to realize the series of processing with hardware.

## Claims

1. A content acquisition apparatus comprising:
a receiving section for receiving first content information including division number information indicating the number of divided data, that are acquired by dividing first content data and that are respectively stored in any of one or two or more content storage apparatuses, and data information corresponding to the first content data;
a generation section for generating for each of the divided data divided data specifying information indicating each of the divided data based on the division number information and the data information; and
an acquisition section for acquiring according to the divided data specifying information the divided data from the one or two or more content storage apparatuses.

2. The content acquisition apparatus according to claim 1, wherein
location information indicating the location of the divided data is stored in a location information storage apparatus specified based on the divided data specifying information, and
the acquisition section acquires the location information of the divided data from the location information storage apparatus specified based on the divided data specifying information and acquires the divided data from the content storage apparatus indicated by the location information.

3. The content acquisition apparatus according to claim 2, further comprising:
a storage section for storing the divided data acquired by the acquisition section; and
a transmission section for transmitting the location information indicating the location of the divided data in the storage section to the location information storage apparatus specified based on the divided data specifying information.

4. The content acquisition apparatus according to claim 2, wherein
the acquisition section selects, when acquiring multiple pieces of the location information of the divided data from the location information storage apparatus specified based on the divided data specifying information, one piece of the location information from the multiple pieces of the location information and acquires the divided data from the content storage apparatus indicated by the selected location information.

5. The content acquisition apparatus according to claim 2, wherein
a hash-value management range corresponding to a hash value of unique identification information of the location information storage apparatus is assigned to the location information storage apparatus, and
each of the location information of the divided data is stored in a distributed manner in the location information storage apparatus whose management range includes a hash value of the divided data specifying information indicating the divided data.

6. The content acquisition apparatus according to claim 1, wherein
the generation section generates a number of pieces of the divided data specifying information, the number being indicated by the division number information, by adding to the data information each of elements, among elements included in a group of elements arranged in predetermined order, arranged in order within the range corresponding to the number indicated by the division number information.

7. The content acquisition apparatus according to claim 1, wherein
the receiving section further receives second content information indicating second content data and whose form is different from that of the first content information; and
the acquisition section acquires according to the second content information the second content data from a specific content storage apparatus.

8. The content acquisition apparatus according to claim 1, wherein
the first content specifying information is included in an RSS feed.

9. A program causing a computer to function as:
a receiving section for receiving first content specifying information including division number information indicating the number of divided data, that are acquired by dividing first content data and that are respectively stored in any of one or two or more content storage apparatuses, and data information corresponding to the first content data;
a generation section for generating for each of the divided data divided data specifying information indicating each of the divided data based on the division number information and the data information; and
an acquisition section for acquiring according to the divided data specifying information the divided data from the one or two or more content storage apparatuses.

10. A content acquisition method to be executed in a content acquisition apparatus comprising the steps of:
receiving first content specifying information including division number information indicating the number of divided data, that are acquired by dividing first content data and that are respectively stored in any of one or two or more content storage apparatuses, and data information corresponding to the first content data;
generating for each of the divided data divided data specifying information indicating each of the divided data based on the division number information and the data information; and
acquiring according to the divided data specifying information the divided data from the one or two or more content storage apparatuses.

11. A content acquisition system comprising one or two or more content storage apparatuses and a content acquisition apparatus, wherein
the content storage apparatus includes:
a dividing section for dividing first content data and acquiring a predetermined number of divided data;
a divided data storage section for storing each of the divided data; and
a communication section for transmitting first content specifying information including division number information indicating the predetermined number and data information corresponding to the first content data, and
the content acquisition apparatus includes:
a receiving section for receiving the first content specifying information;
a generation section for generating for each of the divided data divided data specifying information indicating each of the divided data based on the division number information and the data information; and
an acquisition section for acquiring according to the divided data specifying information the divided data from the one or two or more content storage apparatuses.
